# EUROPÄISCHE PATENTSCHRIFT

(11) **EP 1 538 873 B1**
(45) Veröffentlichungstag und Bekanntmachung des Hinweises auf die Patenterteilung: **18.03.2015**
(21) Anmeldenummer: 04026930.0
(22) Anmeldetag: 12.11.2004
(51) Int. Cl.: H04B 5/00, H04B 5/06, H04R 25/00

(54) **Hörgerät mit drahtlosem Übertragungssytem**
Hearing aid with wireless transmission system
Appareil auditif avec système de transmission sans fil

(30) Priorität: 01.12.2003 DE 10356092
(43) Veröffentlichungstag der Anmeldung: 08.06.2005
(73) Patentinhaber: Siemens Audiologische Technik GmbH, 91058 Erlangen (DE)
(72) Erfinder: Niederdränk, Torsten, Dr., 91056 Erlangen (DE)
(74) Vertreter: Maier, Daniel Oliver

(56) Entgegenhaltungen:
- EP-A- 0 176 116
- EP-A- 0 823 829
- DE-A1- 3 431 584

## Beschreibung

Die vorliegende Erfindung betrifft ein Hörgerät mit einer Übertragungseinrichtung, die eine Datenübertragung in einem Spektralbereich oberhalb des hörbaren Bereichs zwischen dem Hörgerät und einer externen Vorrichtung ermöglicht, und einer elektroakustischen Wandlereinrichtung zum Erzeugen von Schallsignalen aus elektrischen Signalen und/oder einer Telefonspuleneinrichtung zum Empfangen eines elektromagnetischen Signals. Darüber hinaus betrifft die vorliegende Erfindung entsprechende Verfahren zum Betreiben eines Hörgeräts.

Im Hörgerätebereich gibt es zahlreiche Anwendungen für drahtlose Übertragungssysteme. Beispiele hierfür sind die drahtlose Programmierung, die Anbindung einer Fernbedienung, aber auch der Empfang von Audiodaten von externen Quellen. In der Praxis allerdings erweist sich die Integration eines solchen Systems in ein Hörgerät auf Grund der strengen Bedingungen bezüglich Platzbedarf und Energieverbrauch als sehr schwierig, so dass es nur sehr wenige technische Realisierungen gibt. Darüber hinaus erfordern Anwendungen wie etwa die Programmierung eine bidirektionale drahtlose Verbindung, deren Implementierung mit um so größeren technischen Problemen verbunden ist.

Derzeit auf dem Markt verfügbare Fernbedienungssysteme übertragen zwar Daten in das Hörgerät, der umgekehrte Weg allerdings ist nicht möglich. Dabei werden meist induktive Übertragungssysteme verwendet.

Aus dem Dokument DE 100 48 354 A1 ist darüber hinaus eine bidirektionale Verbindung zwischen Hörgeräten bzw. zwischen Hörgerät und Fernbedienung beschrieben. Für diese bidirektionale Verbindung ist allerdings eine separate Antenne notwendig, die im Hörgerät untergebracht werden muss. Da sie einen entsprechenden Platzbedarf besitzt, ist ein universeller Hörgeräteeinsatz von bidirektionalen Datenübertragungssystemen verhindert.

In der Druckschrift DE 34 31 584 A1 und der Druckschrift EP 0 176 116 B1 ist jeweils ein Hörhilfegerät mit Ultraschallsteuerung beschrieben. Dabei wird zum Steuern des Hörgeräts ein Ultraschallsignal von dem Mikrofon des Hörgeräts aufgenommen und separat nach entsprechender Ausfilterung verarbeitet.

**Die Druckschrift** EP 0 823 829 A2 **offenbart ein digitales Hörhilfesystem. Das System umfasst beispielsweise zwei Hörgeräte und eine davon getrennte induktive Aufnahmespule. Die Spule empfängt Magnetfeldsignale in dem Audiofrequenzband. Sie kann aber auch Steuerbefehle oberhalb des Audiofrequenzbands empfangen. Damit lassen sich Programme oder Informationen an einen Empfänger übermitteln.**

Die Aufgabe der vorliegenden Erfindung besteht somit darin, ein Hörgerät vorzuschlagen, das trotz geringem Raumangebot eine bidirektionale Datenübertragung mit einer externen Vorrichtung ermöglicht. Ferner soll ein entsprechendes bidirektionales Übertragungsverfahren bereitgestellt werden.

Erfindungsgemäß wird diese Aufgabe gelöst durch ein Hörgerät mit einer Übertragungseinrichtung, die eine Datenübertragung in einem Spektralbereich oberhalb des hörbaren Frequenzbereichs zwischen dem Hörgerät und einer externen Vorrichtung ermöglicht, und einer elektroakustischen wandlereinrichtung zum Erzeugen von Schallsignalen aus elektrischen Signalen, wobei die elektroakustische Wandlereinrichtung als **die Übertragungseinrichtung** zum Empfangen **und/oder** Senden von elektromagnetischen Signalen in dem Spektralbereich oberhalb des hörbaren Frequenzbereichs an die externe Vorrichtung und/oder von ihr eingesetzt **ist.**

Der Vorteil der genannten Hörgeräte liegt darin, dass zur drahtlosen Übertragung von Daten von und zu einem Hörgerät keine speziellen, geräumigen Antennen in das Hörgerät integriert werden müssen. Vielmehr werden vorhandene Bauteile für die Datenübertragung eingesetzt.

Vorzugsweise besitzt ein Hörgerät, dessen elektroakustische Wandlereinrichtung zum Senden elektromagnetischer Signale oberhalb des hörbaren Frequenzbereichs bzw. Audiofrequenzbereichs verwendet wird, eine Telefonspuleneinrichtung zum Empfangen elektromagnetischer Signale oberhalb des Audiofrequenzbereichs. Unter Umständen kann es aber auch vorteilhaft sein, die Telefonspuleneinrichtung zum Senden und die elektroakustische Wandlereinrichtung zum Empfangen der Hochfrequenzsignale zu verwenden. Damit wird sowohl beim Senden als auch beim Empfangen der Hochfrequenzsignale ein bereits im Hörgerät vorhandenes Bauelement verwendet, so dass kein zusätzlicher Bauraum für eine spezielle Antenne notwendig ist.

Die elektroakustische Wandlereinrichtung oder die Telefonspuleneinrichtung kann in einen Resonanzkreis zum Senden in einem vorgegebenen Frequenzband integriert sein. Dadurch lässt sich eine verhältnismäßig einfache Ansteuerung der Sendekomponenten erreichen.

Ferner kann eine Spule der Telefonspuleneinrichtung einen Ferritkern aufweisen. Dadurch eignet sich die Telefonspuleneinrichtung besser zur Übertragung von Hochfrequenzsignalen.

Für spezielle Anwendungen kann es zweckmäßig sein, wenn die Telefonspuleneinrichtung im Hörgerät zum Empfang elektromagnetischer Signale im Audiofrequenzbereich und eine weitere Spuleneinrichtung zum Empfang elektromagnetischer Signale oberhalb des Audiofrequenzbereichs eingesetzt werden. Dies hat den Vorteil, dass die weitere Spuleneinrichtung für die Hochfrequenzübertragung optimiert und kleiner gestaltet werden kann.

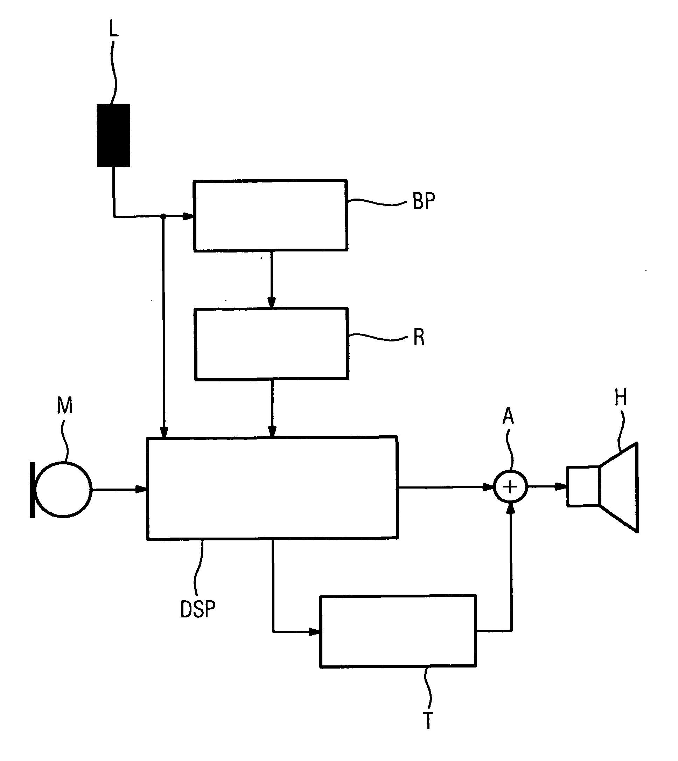

Die vorliegende Erfindung wird nun anhand der beigefügten Zeichnung näher erläutert, die ein Blockschaltbild eines erfindungsgemäßen Hörgeräts wiedergibt.

Das nachfolgend näher beschriebene Ausführungsbeispiel stellt eine bevorzugte Ausführungsform der vorliegenden Erfindung dar.

In Hörgeräten werden meist die sogenannten Hörer als elektroakustische Wandler verwendet. Sie emittieren auf Grund ihres elektromagnetischen Antriebs ein beträchtliches elektromagnetisches Streufeld. Dieses Streufeld, das abhängig von der Art der elektrischen Anregung des Hörers teilweise breitbandig bis in den Bereich etlicher Megahertz reichen kann, stellt eine stetige Störquelle dar, und muss bei der Hörgeräteentwicklung berücksichtigt werden. Der Erfindung liegt nun der Gedanke zu Grunde, dieses "störende" Streufeld konstruktiv für eine Übertragung von Daten aus dem Hörgerät heraus zu nutzen.

In der Figur ist ein entsprechendes Hörgerät als Blockschaltbild dargestellt, wobei der elektroakustische Wandler zum Senden von Hochfrequenzsignalen verwendet wird. Generell besteht ein Hörgerät aus einem Mikrofon M, einem digitalen Signalprozessor DSP und einem Hörer H als elektroakustischen Wandler. Im vorliegenden Beispiel wird das Ausgangssignal des digitalen Signalprozessors DSP und damit der magnetische Kreis des Hörers H mit einem entsprechend modulierten, hochfrequenten Übertragungssignal beaufschlagt. Hierzu ist in das Hörgerät eine Sendeeinrichtung T integriert, die ein Datensignal des digitalen Signalprozessors DSP zur drahtlosen Übertragung moduliert und kodiert. Das Ausgangssignal der Sendeeinheit T wird in einem Addierer A zu dem Ausgangssignal des digitalen Signalprozessors DSP summiert. Die durch die hochfrequenten Signalanteile generierten elektromagnetischen Felder können außerhalb des Hörgeräts empfangen werden. So könnte beispielsweise die Übertragung zu einem Kopfhörer erfolgen, den ein Patient bei einem Hörtest trägt.

Zum Empfang eines von extern übertragenen elektromagnetischen Hochfrequenzsignals kann erfindungsgemäß die Telefonspule L verwendet werden, die in den meisten Hörgeräten ohnehin vorhanden ist. Üblicherweise wird diese Telefonspule bzw. Telecoil L eingesetzt, um elektromagnetische Signale im Audiofrequenzbereich zum digitalen Signalprozessor DSP des Hörgeräts zu übertragen. Gleichzeitig werden die in der Telefonsspule L empfangenen Signale an einen Bandpassfilter BP geleitet, der Spektralanteile des Signals oberhalb des Audiofrequenzbereich ausfiltert. Die ausgefilterten hochfrequenten Anteile werden an eine Empfängerschaltung R weitergeleitet. Diese extrahiert die entsprechenden Daten aus den empfangenen Signalen und überträgt sie an den digitalen Signalprozessor DSP des Hörgeräts um beispielsweise dessen Einstellung zu ändern.

Die Telefonspule ist üblicherweise als Antenne für den Empfang von Signalen im Audiofrequenzbereich optimiert. Um sie nun auch an den zusätzlichen Empfang hochfrequenter Signale anzupassen, kann sie entsprechend elektrisch beschaltet (in der Figur nicht dargestellt) und gegebenenfalls mit einem Ferritkern ausgestattet sein. Auf diese Weise ist es möglich, ein bidirektionales Übertragungssystem in das Hörgerät zu integrieren, ohne zusätzlich große Bauteile in das Hörgerätegehäuse einbringen zu müssen.

Für die bidirektionale Kommunikation kann es ausreichend sein, keine spezielle Antenne neben dem elektroakustischen Wandler H als Sender und der Telefonspule L als Empfänger vorzusehen. Wenn jedoch - wie bereits angedeutet - die Telefonspule L nicht als Empfangsantenne für hochfrequente Signalanteile mitbenutzt werden soll, kann eine für den hochfrequenten Empfang optimierte, kleine Empfangsantenne in das Hörgerät mit eingebaut werden.

## Patentansprüche

1. Hörgerät mit
- einer Übertragungseinrichtung, die eine Datenübertragung in einem Spektralbereich oberhalb des hörbaren Frequenzbereichs zwischen dem Hörgerät und einer externen Vorrichtung ermöglicht, und
- einer elektroakustischen Wandlereinrichtung (H) zum Erzeugen von Schallsignalen aus elektrischen Signalen,
**dadurch gekennzeichnet, dass**
- die elektroakustische Wandlereinrichtung (H) als **die Übertragungseinrichtung** zum Empfangen **und/**oder Senden von elektromagnetischen Signalen in dem Spektralbereich oberhalb des hörbaren Frequenzbereichs an die externe Vorrichtung oder von ihr eingesetzt ist.

2. Hörgerät nach Anspruch 1, das eine Telefonspuleneinrichtung (L) zum Empfangen eines elektromagnetischen Signals aufweist, wobei die Telefonspuleneinrichtung (L) als Empfangselement der Übertragungseinrichtung zum Empfang von Signalen der externen Vorrichtung eingesetzt ist, deren Spektralanteile oberhalb des hörbaren Frequenzbereichs liegen.

3. Hörgerät nach Anspruch 1 oder 2, wobei die elektroakustische Wandlereinrichtung (H) in einen Resonanzkreis zum Senden in einem vorgegebenen Frequenzband integriert ist.

4. Hörgerät nach **Anspruch 2**, wobei eine Spule der Telefonspuleneinrichtung (L) einen Ferritkern aufweist.

5. Hörgerät nach Anspruch **1, das** eine Telefonspuleneinrichtung (L) zum Empfang elektromagnetischer Signale im Audiofrequenzbereich und eine weitere Spuleneinrichtung zum Empfang elektromagnetischer Signale oberhalb des Audiofrequenzbereichs aufweist.

## Claims

1. Hearing aid with
- a transmission device, which permits a data transmission in a spectral range above the audible frequency range between the hearing aid and an external device, and
- an electroacoustic transducer device (H) for generating sound signals from electric signals,
**characterized in that**
- the electroacoustic transducer device (H) is used as the transmission device for receiving and/or transmitting electromagnetic signals in the spectral range above the audible frequency range to the external device or from it.

2. Hearing aid according to Claim 1, which has a telephone coil device (L) for receiving an electromagnetic signal, the telephone coil device (L) being used as the receiving element of the transmission device for receiving signals of the external device of which the spectral components lie above the audible frequency range.

3. Hearing aid according to Claim 1 or 2, the electroacoustic transducer device (H) being integrated in a resonant circuit for transmitting in a predetermined frequency band.

4. Hearing aid according to Claim 2, a coil of the telephone coil device (L) having a ferrite core.

5. Hearing aid according to Claim 1, which has a telephone coil device (L) for receiving electromagnetic signals in the audio frequency range and a further coil device for receiving electromagnetic signals above the audio frequency range.

## Revendications

1. Prothèse auditive comprenant
- un dispositif de transmission, qui rend possible une transmission de données dans un domaine spectral au dessus du domaine de fréquence audible entre la prothèse auditive et un dispositif extérieur et
- un dispositif ( H ) transducteur électroacoustique pour la production de signaux acoustiques à partir de signaux électriques,
**caractérisée en ce que**
- le dispositif ( H ) transducteur électroacoustique est utilisé comme le dispositif de transmission pour émettre des signaux électromagnétiques dans le domaine spectral au dessus du domaine de fréquence audible vers le dispositif extérieur et/ou pour en recevoir.

2. Prothèse auditive suivant la revendication 1, qui a un dispositif ( L ) de pupinisation pour la réception d'un signal électromagnétique, le dispositif ( L ) de pupinisation étant utilisé comme élément de réception du dispositif de transmission pour la réception de signaux du dispositif extérieur, dont les composantes spectrales sont au dessus du domaine de fréquence audible.

3. Prothèse auditive suivant la revendication 1 ou 2, dans laquelle le dispositif ( H ) transducteur électroacoustique est intégré dans un circuit résonnant pour l'émission dans une bande de fréquence donnée à l'avance.

4. Prothèse auditive suivant la revendication 2, dans laquelle une bobine du dispositif ( L ) de pupinisation a un noyau de ferrite.

5. Prothèse auditive suivant la revendication 1, qui a un dispositif ( L ) de pupinisation pour la réception de signaux électromagnétiques dans le domaine de fréquence audio et un autre dispositif de pupinisation pour la réception de signaux électromagnétiques au dessus du domaine de fréquence audible.
